# EUROPEAN PATENT APPLICATION

(11) **EP 4 830 828 A1**
(43) Date of publication of application: **28.10.2026**
(21) Application number: 24919913.4
(22) Date of filing: 05.12.2024
(51) Int. Cl.: B01J 19/12, H05B 6/64, H05B 6/72

(54) **MICROWAVE HEATING SYSTEM AND METHOD, AND MICROWAVE HEATING APPARATUS**

(30) Priority: 25.01.2024 CN 202410108405
(71) Applicant: China Petroleum & Chemical Corporation, Beijing 100728 (CN); Sinopec Research Institute of Safety Engineering Co., Ltd., Qingdao, Shandong 266104 (CN)
(72) Inventor: YIN, Shumeng, Qingdao, Shandong 266104 (CN); SHAN, Xiaowen, Qingdao, Shandong 266104 (CN); SONG, Yunfei, Qingdao, Shandong 266104 (CN); ZHANG, Weihua, Qingdao, Shandong 266104 (CN); DING, Lili, Qingdao, Shandong 266104 (CN); LI, Jianzhe, Qingdao, Shandong 266104 (CN); LI, Ying, Qingdao, Shandong 266104 (CN); ZHANG, Jianzhong, Qingdao, Shandong 266104 (CN); XU, Guang, Qingdao, Shandong 266104 (CN)
(74) Representative: karo IP
(86) International application number: PCT/CN2024/137014
(87) International publication number: WO 2025/156835

(57) **Abstract**

The present disclosure relates to the technical field of microwave heating and discloses a microwave heating system, comprising a vessel body (1), wherein the vessel body (1) includes at least one heating chamber (11); a microwave shielding element (15) is disposed inside the heating chamber (11) and divides the heating chamber (11) into a plurality of sub-heating chambers, each sub-heating chamber being provided with a microwave heating device (3) and a heat-receiving carrier (2) capable of generating heat upon absorbing microwaves. The microwave heating device (3) is mounted on a side wall of the sub-heating chamber and includes a dielectric radiator (33) made of dielectric material. The dielectric radiator (33) is provided with a radiating segment (331) disposed inside the sub-heating chamber and configured to radiate microwaves into the sub-heating chamber to heat the heat-receiving carrier (2). The microwave heating apparatus can effectively improve uniformity of microwave heating of large-scale heat-receiving carriers and microwave incident efficiency.

## Description

### Technical Field

The present disclosure relates to the technical field of microwave heating, and in particular, to a microwave heating system, a microwave heating method, and a microwave heating device.

### Background Art

Governments and society have attached increasing importance to volatile organic compound (VOC) treatment and near-zero emission requirements. Current VOC treatment technologies are generally classified into destruction methods and recovery methods. Compared with recovery technologies, destruction-based VOC treatment technologies can completely and one-time convert VOCs into carbon dioxide and water vapor, and can also convert methane into carbon dioxide to thoroughly incinerate small-molecule hydrocarbons, thus possessing irreplaceable advantages.

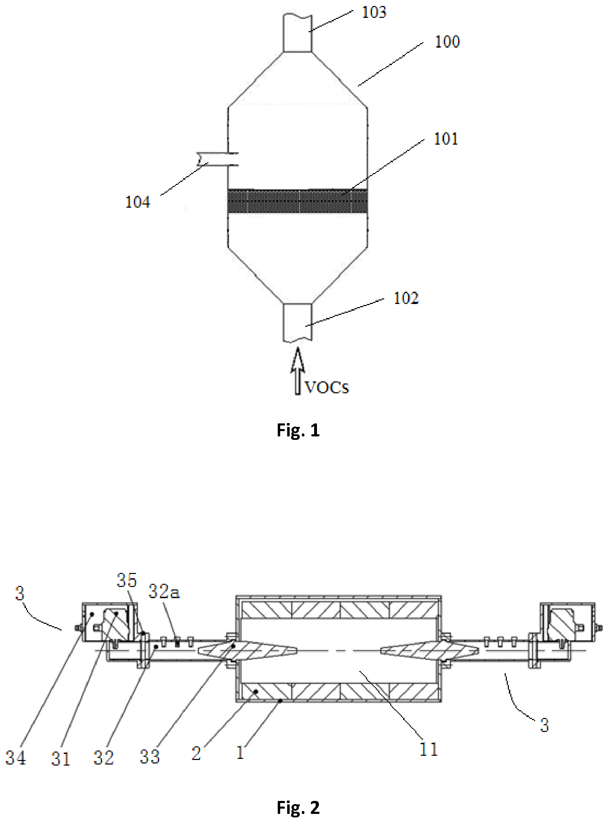

Microwave catalytic oxidation represents a promising development direction among existing destruction technologies. Reference is made to FIG. 1, which illustrates an exemplary conventional microwave catalytic oxidation apparatus. A catalytic oxidation vessel 100 comprises a catalyst bed layer 101, an inlet 102, an outlet 103, and a waveguide 104. The catalyst bed layer 101 contains substances that facilitate chemical reactions of VOCs (i.e., catalysts). When VOCs pass through the heated catalyst bed layer, the catalysts accelerate the decomposition of VOCs and convert them into harmless gases such as carbon dioxide and water vapor. As shown, microwaves are introduced into the vessel 100 via the waveguide 104 and absorbed by the catalyst bed layer 101 to heat the catalyst bed layer 101 up to a temperature sufficient to trigger VOC decomposition reactions. VOCs enter the vessel 100 through the inlet 102; such VOCs may originate from waste gas generated by various industrial processes. The VOCs undergo reactions at the catalyst bed layer 101 and are converted into harmless carbon dioxide and water vapor, which are then discharged through the outlet 103.

Microwave catalytic oxidation technology boasts remarkable advantages including fast heating response, high heating efficiency, and energy conservation. Nevertheless, conventional microwave catalytic oxidation technologies still suffer from numerous drawbacks. For instance, as the size of the catalyst bed layer expands to the meter scale, microwaves fail to achieve uniform heating of the large-scale bed layer, and may even cause localized overheating of catalyst materials, impairing the overall utilization efficiency and safety of the catalyst bed layer.

Furthermore, conventional technologies lack integral penetration heating for large-scale catalyst bed layers. Limited by the skin depth of materials, the penetration depth of microwaves into wave-absorbing catalysts is generally less than 5 cm, making three-dimensional integral penetration heating of meter-scale bed layers unfeasible and hindering industrial deployment.

In addition, microwaves are introduced into the catalytic oxidation vessel through a waveguide, where the microwave-absorbing material (e.g., the catalyst bed layer) absorbs the microwaves. The unabsorbed microwaves are reflected and return through the waveguide, thereby affecting energy utilization efficiency.

Moreover, waveguides used to guide and transmit microwaves are mostly metal leaky waveguides with electric currents on metal surfaces. The electric field intensity at leak gaps may even exceed the breakdown electric field strength under humid air conditions, creating significant safety hazards when treating flammable and explosive VOCs.

### Summary

The present disclosure aims to address at least one of the above defects in microwave catalytic oxidation processes, and provides a microwave heating system, a microwave heating method, and a microwave heating device.

To achieve one of the aims, a first aspect of the present disclosure provides a microwave heating system, comprising a vessel body, wherein the vessel body includes at least one heating chamber; wherein a microwave shielding element is disposed inside the heating chamber and divides the heating chamber into a plurality of sub-heating chambers, each sub-heating chamber being provided with a microwave heating device and a heat-receiving carrier capable of generating heat upon absorbing microwaves, wherein the microwave heating device is mounted on a side wall of the sub-heating chamber, the microwave heating device comprising a dielectric radiator made of dielectric material, the dielectric radiator being provided with a radiating segment disposed inside the sub-heating chamber and being configured to radiate microwaves into the sub-heating chamber to heat the heat-receiving carrier.

According to the microwave heating system of the first aspect of the present disclosure, the microwave shielding element extends along the entire length of the heating chamber to arrange each sub-heating chamber in parallel, and dielectric radiators are oppositely mounted on side walls at both ends of each sub-heating chamber.

According to the microwave heating system of the first aspect of the present disclosure, each sub-heating chamber is equipped with an even number of dielectric radiators, the even number of dielectric radiators being divided into two groups symmetrically mounted on side walls at both ends of the sub-heating chamber.

According to the microwave heating system of the first aspect of the present disclosure, the vessel body comprises a plurality of vertically stacked heating chambers, the heat-receiving carriers being arranged as heat-receiving carrier layers at upper and/or lower portions of each sub-heating chamber, and the temperatures of the stacked heating chambers being independently controllable or forming a temperature gradient from top to bottom.

According to the microwave heating system of the first aspect of the present disclosure, the microwave shielding element is a second microwave shielding element, and a first microwave shielding element is arranged between every two vertically adjacent heating chambers.

According to the microwave heating system of the first aspect of the present disclosure, the second microwave shielding element is a steel plate for microwave shielding and gas isolation, and the first microwave shielding element is a steel mesh for microwave shielding while permitting gas passage.

According to the microwave heating system of the first aspect of the present disclosure, the radiating segment has a multi-faceted structure comprising radiating surfaces facing the heat-receiving carrier to emit microwaves toward the heat-receiving carrier.

According to the microwave heating system of the first aspect of the present disclosure, the radiating segment has a tapered multi-faceted structure, and the radiating surfaces are tapered.

According to the microwave heating system of the first aspect of the present disclosure, the tapered multi-faceted structure of the radiating segment is a frusto-pyramidal structure, the radiating surfaces consist of two opposite surfaces of the frusto-pyramidal structure, the radiating segment further includes two side surfaces adjacent to the two radiating surfaces respectively, and the area of each radiating surface is larger than that of each side surface.

According to the microwave heating system of the first aspect of the present disclosure, the frusto-pyramidal structure is a quadrangular frusto-pyramidal structure, with two radiating surfaces and two side surfaces.

According to the microwave heating system of the first aspect of the present disclosure, the heating chamber has a rectangular cross-section, the dielectric radiators of two vertically adjacent heating chambers are mounted on adjacent side walls or non-adjacent side walls, and where the dielectric radiators are mounted on non-adjacent side walls, the extension directions of the upper and lower dielectric radiators are perpendicular to each other.

According to the microwave heating system of the first aspect of the present disclosure, the heat-receiving carrier contains catalysts, and the vessel body is provided with a reactant inlet and a product outlet, allowing fluid reactants fed through the reactant inlet to flow through the heat-receiving carrier and undergo chemical reactions under catalysis of the catalysts.

According to the microwave heating system of the first aspect of the present disclosure, the length of the heating chamber along the extension direction of the dielectric radiator is 2 to 4 times the length by which the radiating segment extends into the heating chamber.

According to the microwave heating system of the first aspect of the present disclosure, the microwave heating device comprises a microwave generating unit, the dielectric radiator penetrating through a side wall of the vessel body to extend into the sub-heating chamber, and a waveguide configured to guide microwaves generated by the microwave generating unit to the dielectric radiator.

According to the microwave heating system of the first aspect of the present disclosure, the dielectric radiator further includes a coupling segment extending inside the waveguide and a transmission segment extending between the coupling segment and the radiating segment, the coupling segment having a tapered multi-faceted tip structure.

According to the microwave heating system of the first aspect of the present disclosure, the length of the coupling segment is 0.75 to 1 times the microwave wavelength; the length of the radiating segment is at least 0.8 times the microwave wavelength.

According to the microwave heating system of the first aspect of the present disclosure, the material of the dielectric radiator has a dielectric constant greater than 9 and a dielectric loss less than 0.02.

A second aspect of the present disclosure provides a microwave heating device for use in the microwave heating system according to the first aspect, the microwave heating device comprising a microwave generating unit, a dielectric radiator configured to radiate microwaves generated by the microwave generating unit toward a heat-receiving carrier, and a waveguide configured to guide microwaves generated by the microwave generating unit to the dielectric radiator, wherein the dielectric radiator comprises a radiating segment disposed inside the heating chamber, the radiating segment having a tapered multi-faceted structure including radiating surfaces facing the heat-receiving carrier to emit microwaves toward the heat-receiving carrier.

A third aspect of the present disclosure provides a waste gas treatment method implemented on the microwave heating system according to the first aspect, wherein the microwave heating system includes a controller and temperature sensors disposed on heat-receiving carriers or inside heating chambers to monitor temperatures of the heat-receiving carriers in real time, the method comprising:
receiving measured temperatures from the temperature sensors;
comparing the measured temperatures with a target temperature;
outputting control signals to a microwave generating unit of a microwave heating device based on a difference between the measured temperatures and the target temperature, so as to control the microwave generating unit to generate microwaves for heating heat-receiving carriers inside the heating chambers; and
opening a reactant inlet to inject waste gas containing volatile organic compounds in response to the measured temperatures being greater than or equal to the target temperature.

A fourth aspect of the present disclosure provides a controller, comprising:
a processor; and
a computer-readable storage medium storing a computer program including executable instructions, wherein the executable instructions, when executed by the processor, implement the method according to the third aspect.

A fifth aspect of the present disclosure provides a computer-readable storage medium storing a computer program including executable instructions, wherein the executable instructions, when executed by a processor, implement the method according to the third aspect.

A fifth aspect of the present disclosure provides a computer program product comprising executable instructions, wherein the executable instructions, when executed by a processor, implement the method according to the third aspect.

Through the above technical solutions, the microwave heating apparatus and waste gas treatment system of the present disclosure can realize uniform heating of large-scale bed layers via microwaves, achieve superior uniformity of microwave distribution within the heating chamber (also referred to as reaction chamber or free space), and significantly improve heating uniformity of bed layers.

In the microwave heating apparatus or device of the present disclosure, the dielectric radiator carries no electric current and generates no heat, achieving intrinsic safety when contacting flammable and explosive gases.

In summary, heating large-scale catalyst bed layers using the microwave heating device of the present disclosure delivers multiple beneficial effects including intrinsic safety, high microwave energy utilization, uniform microwave radiation, uniform bed layer heating, and low overall costs.

Compared with conventional technologies, the technical solution of the present disclosure exhibits prominent advantages in large-scale heating: it enables heating of larger catalyst bed layers and facilitates fabrication of large-scale microwave reaction device; heating safety is enhanced, with the maximum electric field intensity inside the reactor far lower than the electric field breakdown strength under humid air, and no electric current on radiator surfaces. The solution is applicable to flammable and explosive environments, especially for treating flammable and explosive gases, with intrinsic safety design realized both inside and outside the reactor. In addition, the arrangement of dielectric radiators and shielding elements enables more uniform overall microwave heating of catalyst bed layers, eliminating localized overheating that may trigger safety hazards or shorten catalyst service life.

The technical solution of the present disclosure can be applied to microwave heating of large-scale solids, such as wave-absorbing catalysts or wave-absorbing adsorbents, to realize rapid heating of wave-absorbing solids; heating wave-absorbing catalysts to participate in gas or liquid chemical reactions for efficient and rapid catalyst heating; heating wave-absorbing adsorbents for thermal desorption in environmental governance fields.

### Brief Description of the Drawings

The accompanying drawings illustrate various exemplary embodiments of each aspect of the present disclosure and, together with the specification, serve to explain the principles of the present disclosure. Those skilled in the relevant art will recognize that the specific embodiments illustrated in the drawings are merely exemplary and are not intended to limit the scope of the present disclosure. It should be understood that an element shown in a certain embodiment may be designed as multiple elements, or multiple elements may be integrated into a single element. In some embodiments, a component illustrated as an internal part of another element may be implemented as an external component of the other element, and vice versa. In the drawings:
FIG. 1 is an example of catalytic oxidation using microwave technology in the prior art;
FIG. 2 is a cross-sectional structural schematic diagram of a microwave heating system according to a preferred embodiment of the present disclosure;
FIG. 3 is a front view of a dielectric radiator of a microwave heating device used in the microwave heating system of FIG. 2;
FIG. 4 shows different projection views of the dielectric radiator of FIG. 3;
FIG. 5 is a front view of a modified embodiment of the dielectric radiator of the present disclosure;
FIG. 6 is a structural schematic diagram of a microwave heating system according to another preferred embodiment of the present disclosure;
FIG. 7 is a cross-sectional view illustrating an arrangement scheme of multiple microwave heating devices in the microwave heating system of FIG. 6;
FIG. 8 is a top view illustrating an arrangement scheme of multiple microwave heating devices in the microwave heating system of FIG. 6;
FIG. 9 is a structural schematic diagram of a microwave heating system according to another preferred embodiment of the present disclosure;
FIG. 10 is a cross-sectional view illustrating an arrangement scheme of multiple microwave heating devices in the microwave heating system of FIG. 9;
FIG. 11 is a top view illustrating an arrangement scheme of multiple microwave heating devices in the microwave heating system of FIG. 9;
FIG. 12 is a structural schematic diagram of a microwave heating system according to another preferred embodiment of the present disclosure;
FIG. 13 is a structural schematic diagram of a microwave heating system according to another preferred embodiment of the present disclosure;
FIG. 14 is a surface temperature distribution diagram of a heating process performed by a microwave heating device without a dielectric radiator;
FIG. 15 is a surface temperature distribution diagram of a heating process performed by a microwave heating system equipped with multiple dielectric radiators but no first microwave shielding element;
FIG. 16 is a surface temperature distribution diagram of a heating process performed by a microwave heating system equipped with multiple dielectric radiators and a first microwave shielding element;
FIG. 17 is a surface temperature distribution diagram of a heating process performed by a microwave heating system equipped with multiple dielectric radiators, a first microwave shielding element and a second microwave shielding element;
FIG. 18 is a temperature distribution diagram of a microwave heating system where corresponding microwave heating devices of adjacent heating chambers are mounted on the same side walls;
FIG. 19 is a temperature distribution diagram of a microwave heating system where corresponding microwave heating devices of adjacent heating chambers are mounted on adjacent side walls;
FIG. 20 shows an electric field distribution contour plot of Example 6;
FIG. 21 shows an electric field distribution contour plot of Example 7;
FIG. 22 shows an electric field distribution contour plot of Example 8;
FIG. 23 shows an electric field distribution contour plot of Example 9;
FIG. 24 shows an electric field distribution contour plot of Example 10;
FIG. 25 shows an electric field distribution contour plot of Example 11;
FIG. 26 shows an electric field distribution contour plot of Example 12;
FIG. 27 shows an electric field distribution contour plot of Example 13;
FIG. 28 illustrates a waste gas treatment method implemented using the microwave heating system of the present disclosure;
FIG. 29 illustrates a controller according to an embodiment of the present disclosure.

### Reference Numerals

1 - Vessel body; 11 - Heating chamber; 12 - Reactant inlet; 13 - Product outlet; 14 - First microwave shielding element; 15 - Second microwave shielding element;
2 - Heat-receiving carrier;
3 - Microwave heating device; 31 - Microwave generating unit; 32 - Waveguide; 32a - Tuning pin; 33 - Dielectric radiator; 331 - Radiating segment; 331a - Radiating surface; 331b - Side surface; 34 - Explosion-proof excitation cavity; 332 - Transmission segment; 332a - Flange portion; 333 - Coupling segment; 35 - Dielectric sealing window.

### Detailed Description of Embodiments

In the description of the present application, terms "first" and "second" are used merely for descriptive purposes and shall not be construed as indicating relative importance or implicitly specifying the quantity of indicated technical features. Accordingly, unless explicitly stated otherwise, a feature defined by "first" or "second" may explicitly or implicitly include one or more such features. The term "a plurality of" means two or more. The term "comprising" and any variations thereof are intended to cover non-exclusive inclusion, such that a process, method, apparatus, article or device that comprises a list of elements may include other elements not expressly listed or inherent to such process, method, apparatus, article or device.

Orientation or positional relationship terms such as "upper", "lower", "left", "right", "vertical", "horizontal", "top", "bottom", "inner", and "outer" are used based on the orientation or positional relationships shown in the drawings for simplified description of the present application, and do not indicate that the referenced apparatus or element must adopt a specific orientation, be constructed or operated in a specific orientation. Accordingly, such terms shall not be construed as limiting the present application.

Unless otherwise explicitly defined and limited, terms "mounted", "connected", and "coupled" shall be interpreted broadly. For example, connection may be fixed connection, detachable connection, or integral connection; may be mechanical connection or electrical connection; may be direct connection, indirect connection via an intermediate medium, or internal communication between two components. A person of ordinary skill in the art may interpret the specific meaning of such terms in the present application based on specific contexts.

The specific embodiments of the present disclosure are described in detail below with reference to the accompanying drawings. It shall be understood that the specific embodiments described herein are only used to illustrate and explain the present disclosure, and are not intended to limit the present disclosure. For brevity, only components closely related to the embodiments of the present application are described in detail below.

Reference is made to FIG. 2, which illustrates a microwave heating system according to one embodiment of the present disclosure. The microwave heating system includes at least a vessel body 1, and the vessel body 1 includes at least one heating chamber 11. Microwave heating devices 3 and heat-receiving carriers 2 are disposed on or inside the heating chamber 11, wherein the microwave heating devices 3 are mounted on side walls of the heating chamber 11. The heat-receiving carrier 2 is capable of absorbing microwaves to become heated and increase in temperature. The heat-receiving carriers 2 are laid flat to form a layer, which may be referred to as a heat-receiving carrier layer. As shown in FIG. 2, the microwave heating device 3 is installed on a side wall of the heating chamber 11 to radiate microwaves into the heating chamber 11.

For waste gas (e.g., VOC) treatment applications, the heat-receiving carrier 2 inside the heating chamber 11 contains catalysts. After absorbing microwaves and heating up, the heat-receiving carrier heats the catalysts to trigger decomposition reactions of waste gas flowing through the catalysts. Alternatively, the heat-receiving carrier 2 itself may be a wave-absorbing catalyst, in which case the heat-receiving carrier layer forms a wave-absorbing catalyst bed layer.

With continued reference to FIG. 2, each microwave heating device 3 includes a microwave generating unit 31, a dielectric radiator 33 penetrating through a side wall of the vessel body 1 or heating chamber 11 to extend into the heating chamber 11, and a waveguide 32 configured to guide microwaves generated by the microwave generating unit 31 to the dielectric radiator 33.

The dielectric radiator 33 is a dielectric rod antenna fabricated from low-loss highfrequency dielectric materials, a typical traveling-wave antenna made of electrical dielectric or insulating materials (e.g., polystyrene, ceramics). The dielectric rod antenna guides microwave propagation; compared with metal waveguides, the dielectric boundary allows considerable power overflow to radiate into free space (e.g., the heating chamber 11).

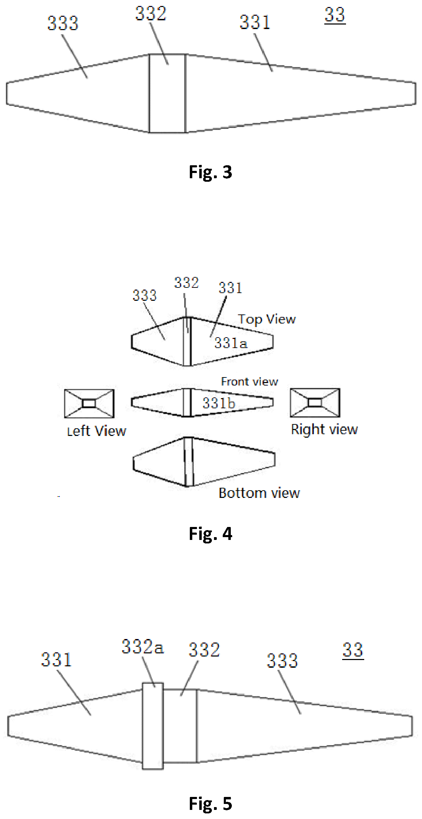

The portion of the dielectric radiator 33 that emits microwaves toward the heat-receiving carrier inside the heating chamber is referred to as the radiating segment. The inventors have found that, by adjusting the shape of the radiating segment of the dielectric radiator 33, the impedance of the dielectric rod antenna can be adjusted, thereby achieving good impedance matching between the dielectric rod antenna and air and thus improving radiation efficiency. Furthermore, shaping the radiating segment enables uniform distribution of microwaves emitted by the radiating segment onto the heat-receiving carrier, realizing uniform heating of the heat-receiving carrier layer. Specifically, in the present disclosure, the radiating segment 331 of the dielectric radiator 33 has a multi-faceted shape, such as a tapered multi-faceted structure (e.g., pyramidal or frusto-pyramidal, preferably quadrangular pyramidal or quadrangular frusto-pyramidal). This multi-faceted structure achieves favorable impedance matching between the dielectric rod antenna and air, reduces surface wave reflection, improves radiation efficiency, directs most microwaves to radiate or emit into the heating chamber 11, and adjusts microwave radiation directions to uniformly irradiate the heat-receiving carrier 2 for overall uniform heating of the heat-receiving carrier and heat-receiving carrier layer. The multi-faceted structure of the dielectric radiator 33 is described in further detail below with reference to FIGS. 3-5.

With continued reference to FIG. 2, two or more heat-receiving carrier layers may be provided around (for example above and/or below) the dielectric radiator 33, such that the dielectric radiator 33 is sandwiched between two opposing heat-receiving carrier layers. To ensure uniform microwave irradiation across all regions of the heat-receiving carrier layers, microwave heating devices 3 may be symmetrically mounted on both sides (left and right sides as illustrated) of the heating chamber 11, such that the dielectric radiators 33 of the opposing microwave heating devices 3 are aligned collinearly along their length extension directions.

Reference is now made to FIGS. 3-5, which illustrate the specific multi-faceted structure of the dielectric radiator 33. As shown, the dielectric radiator 33 may include a coupling segment 333, a transmission segment 332, and a radiating segment 331. The coupling segment 333 and the radiating segment 331 are disposed on opposite sides of the transmission segment 332, and both the coupling segment 333 and the radiating segment 331 may be formed as quadrangular frusto-pyramidal structures.

The dielectric radiator 33 as a whole has a structure that is thin at both ends and thick in the middle. The quadrangular frusto-pyramidal structures of the coupling segment 333 and radiating segment 331 each include four trapezoidal side surfaces, with a quadrilateral truncated end face (preferably rectangular or square). As shown in FIG. 4, the four side surfaces of the quadrangular frusto-pyramidal shape are respectively both upper and lower opposing side surfaces 331a and both front and rear opposing side surfaces 331b. In a preferred embodiment, the width (or area) of the upper and lower side surfaces 331a of the coupling segment 333 and radiating segment 331 is greater than that of the front and rear side surfaces 331b. The upper and lower side surfaces 331a face the heat-receiving carrier layers and are accordingly referred to as radiating surfaces. In summary, with connection with FIG. 2, the radiating segment 331 is disposed inside the heating chamber 11 and forms a pair of radiating surfaces 331a facing the corresponding heat-receiving carrier layers and a pair of side surfaces 331b adjacent to the radiating surfaces 331a, wherein the width (or area) of each radiating surface 331a is larger than that of each side surface 331b. Along the direction toward the interior of the heating chamber 11, the radiating surfaces 331a of the two oppositely disposed dielectric radiators 33 extend closer to each other, and the side surfaces 331b also extend closer to each other, so that the radiating segment 331 has a tapered polyhedral structure. This configuration enables microwaves generated by the microwave generating unit 31 to be uniformly radiated into the heating chamber 11 via the radiating segment 331; in particular, the radiating surfaces 331a efficiently and uniformly emit microwaves toward the heat-receiving carrier layers they face, realizing uniform heating of the heat-receiving carrier layers over a large scale.

In the dielectric radiator 33, the length of the coupling segment 333 is preferably 0.75 to 1 times the microwave wavelength; the length of the radiating segment 331 is preferably at least 0.8 times the microwave wavelength, more preferably 0.8 to 2.5 times the microwave wavelength. The microwave may be 2450 MHz or 915 MHz microwave. For 2450 MHz microwaves, the wavelength is approximately 122.4 mm.

In the dielectric radiator 33, the tapered angle of the multi-faceted coupling segment 333 (i.e., the angle between the central line along the length of the dielectric radiator and the side surfaces) is preferably 5° to 85°, and the tapered angle of the multi-faceted radiating segment 331 is preferably 5° to 85°.

In the microwave heating system, the size of the heating chamber 11 along the extension direction of the dielectric radiator 33 is preferably 2 to 4 times the length by which the radiating segment 331 extends into the heating chamber 11.

In the present disclosure, preferably, the material of the dielectric radiator has a dielectric constant greater than 9 and a dielectric loss < 0.02. More preferably, the material of the dielectric radiator is ceramic or polystyrene.

As shown in FIG. 5, the transmission segment 332 of the dielectric radiator 33 may have a flange portion 332a. In the state of being installed to the container body 1 or the heating chamber 11, the transmission section 332 passes through the side wall of the container body 1 or the heating chamber 11, and the flange portion 332a abuts against the wall surface (outer wall surface or inner wall surface) of the container body 1 or the heating chamber 11, and the flange portion can be pressed and fixed to the side wall of the heating chamber 11 by a waveguide flange. This abutting and fixing structure is used to prevent VOCs in the container body 1 or the heating chamber 11 from leaking into the microwave heating apparatus 3 or into the external environment, causing explosion or contamination.

With reference to FIG. 2, the microwave heating device 3 of the present disclosure may include an explosion-proof excitation cavity 34. The microwave generating unit 31 may be a magnetron disposed inside the explosion-proof excitation cavity 34. The explosion-proof excitation cavity 34 is connected to one end of the waveguide 32, and the other end of the waveguide 32 is connected to the dielectric radiator 33. The coupling segment 333 of the dielectric radiator 33 extends into the waveguide 32.

In a preferred embodiment, the explosion-proof excitation cavity 34 and the waveguide 32 are physically separated by a dielectric sealing window 35, and microwaves generated by the magnetron can pass through the dielectric sealing window 35 into the waveguide 32. In specific embodiments, the dielectric sealing window 35 is a sealed quartz window. The dielectric sealing window 35 prevents VOCs inside the vessel body 1 and/or heating chamber 11 from leaking into the explosion-proof excitation cavity 34 to trigger explosion or pollution.

In a preferred embodiment, the waveguide may further be provided with tuning pins 32a for adjusting microwave reflected power to further reduce reflected microwave power.

For the microwave heating device of the present disclosure, the output power of microwaves is adjusted by regulating the microwave power supply of the microwave generating unit 31, thereby controlling the temperature of the heat-receiving carrier layers formed of the heat-receiving carriers (for example wave-absorbing catalysts). The dielectric radiator enables integral, uniform, and safe heating of large-size catalyst bed layers.

In the microwave heating device of the present disclosure, the coupling segment 333 of the dielectric radiator 33 is disposed inside the waveguide 32, and the radiating segment 331 is disposed inside the heating chamber 11. Wave-absorbing and thermally conductive heat-receiving carriers 2 (e.g., catalyst bed layers) are arranged on upper and lower sides of the heating chamber 11. The microwave generating unit 31 generates microwaves transmitted via the waveguide 32; microwave energy is coupled by the coupling segment 333 of the dielectric radiator 33, further transmitted by the transmission segment 332, directionally and uniformly radiated by the radiating segment 331, and finally absorbed by the heat-receiving carriers 2 to heat the heat-receiving carriers.

In the microwave heating system of the present disclosure, temperature sensors (not shown) are disposed on the heat-receiving carriers 2 or inside the heating chambers 11 to monitor the temperature of the heat-receiving carriers or heat-receiving carrier layer in real time. A controller (not shown) disposed in the microwave heating system is configured to receive measured temperature from the temperature sensors, compare the measured temperatures with a target temperature, and output control signals to the microwave generating unit 31 of the microwave heating device 3 based on the difference between measured temperatures and the target temperature, thereby regulating the output power of the microwave generating unit 31.

After the measured temperature reaches the target temperature, the reactant inlet is opened to inject reaction media (e.g., VOC waste gas) to flow through the heat-receiving carriers 2 and undergo efficient decomposition reactions with the assistance of the heat-receiving carriers 2.

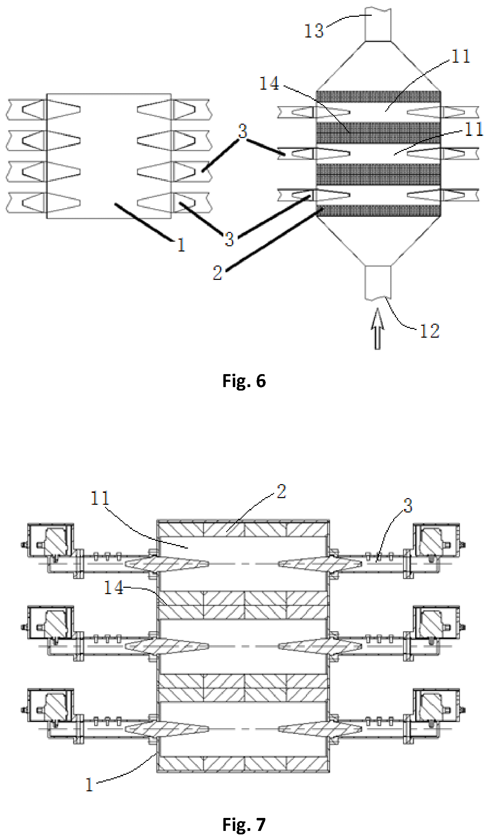

FIGS. 6-13 illustrate microwave heating systems according to different preferred embodiments, wherein multiple microwave heating devices are arranged on side walls of the heating chamber 11 in different configurations, with the radiating segments 331 of the dielectric radiators 33 of each microwave heating device 3 extending into the heating chamber 11.

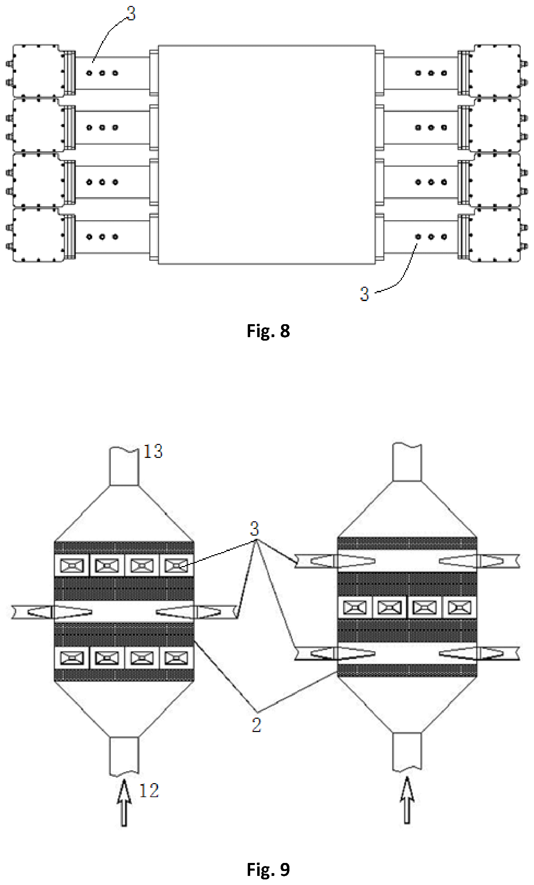

Reference is made to FIGS. 6-8, which illustrate a schematic structure of one microwave heating system embodiment. FIG. 6 shows the overall schematic of the microwave heating system. As shown in the right half of FIG. 6, the vessel body 1 is internally provided with a plurality of vertically stacked heating chambers 11 (stacked along a first direction) to form the microwave heating system. Each heating chamber 11 is internally provided with both upper and lower heat-receiving carrier layers arranged along the first direction. Microwave heating devices 3 are symmetrically disposed in pairs on opposite sides of the space defined between the upper and lower heat-receiving carrier layers. As shown in the left half of FIG. 6, the dielectric radiators 33 of each pair of microwave heating devices 3 are collinear along their length extension directions. FIG. 7 is a cross-sectional view illustrating an arrangement scheme of multiple microwave heating devices in the microwave heating system of FIG. 6, equivalent to multiple heating chambers 11 of FIG. 2 stacked vertically. First microwave shielding elements 14 (e.g., shielding steel meshes) may optionally be disposed between vertically stacked heating chambers 11 (or between adjacent heat-receiving carrier layers). The first microwave shielding elements 14 enable independent temperature control of each heating chamber 11 without mutual interference between vertically adjacent heating chambers 11, while permitting passage of VOCs or other relevant gases; the first microwave shielding elements 14 may be perforated stainless steel plates or shielding steel meshes. FIG. 8 is a top view illustrating an arrangement scheme of multiple microwave heating devices in the microwave heating system of FIG. 6. As shown in FIG. 8, the vessel body 1 has a rectangular cross-section in the horizontal direction. In a preferred embodiment, in one heating chamber, the microwave heating devices 3 or dielectric radiators 33 are arranged in pairs on the side walls in only one direction (e.g., the left-right direction), and not in other directions (e.g., the front-rear direction). The purpose of such an arrangement is to achieve uniform electric field intensity, preventing the microwaves emitted by microwave heating apparatuses 3 arranged in multiple directions from overlapping and concentrating at the center of the heating chamber, which may cause a strong electric field that could break down the air and pose a safety hazard for treating flammable and explosive VOCs.

The vessel body 1 is provided with a reactant inlet 12 and a product outlet 13, allowing fluid reactants fed through the reactant inlet 12 to flow along the first direction through the heat-receiving carriers in the heat-receiving carrier layers and be discharged through the product outlet 13. Where multiple stacked heating chambers 11 are provided, reaction fluid entering the vessel body 1 flows sequentially through the multiple heat-receiving carriers from bottom to top along the first direction for treatment.

In the microwave heating system of FIGS. 6-8 comprising multiple heating chambers 11, each heating chamber 11 controls heating temperature via its own dielectric radiator 33. Temperature sensors disposed on the heat-receiving carriers or inside the heating chambers 11 monitor the temperature of each heat-receiving carrier in real time and feed temperature signals back to the controller. The controller outputs control signals to the microwave generating unit 31 based on comparison between monitored temperatures and the target temperature to regulate the output power of the microwave generating unit 31 and thus control the temperature of the heat-receiving carriers.

The vertical stacking of multiple heating chambers 11 results in vertically stacked multilayer heat-receiving carriers, with each heat-receiving carrier layer kept relatively thin to allow full microwave penetration and heating, solving the problem of insufficient microwave penetration depth.

Furthermore, the temperature of each heating chamber 11 may be independently controlled to facilitate efficient treatment of different VOC components. Preferably, gradient temperature control may be implemented across stacked heating chambers 11 to establish a temperature gradient from bottom to top or top to bottom inside the vessel body 1.

Reference is next made to FIGS. 9-11, which illustrate a microwave heating system according to another embodiment, improved based on the microwave heating system of FIGS. 6-8. Specifically, instead of the microwave heating device arrangement of FIGS. 6-8, as shown in FIGS. 9-11, the microwave heating devices or their dielectric radiators of two vertically adjacent heating chambers 11 are vertically staggered and perpendicular to one another. For simplified description, only differences from the structure of FIGS. 6-8 are explained below.

Specifically, with reference to FIG. 9, the left half shows a left view of the microwave heating system and the right half shows a front view. As illustrated, the extension directions of the dielectric radiators of microwave heating devices disposed on two vertically adjacent heating chambers 11 are mutually perpendicular and staggered. Staggered arrangement means microwave heating devices or their dielectric radiators of one heating chamber are disposed on left and right opposite side walls, while microwave heating devices or their dielectric radiators of another vertically adjacent heating chamber are disposed on front and rear opposite side walls. This preferred arrangement achieves more uniform heating of the heat-receiving carriers.

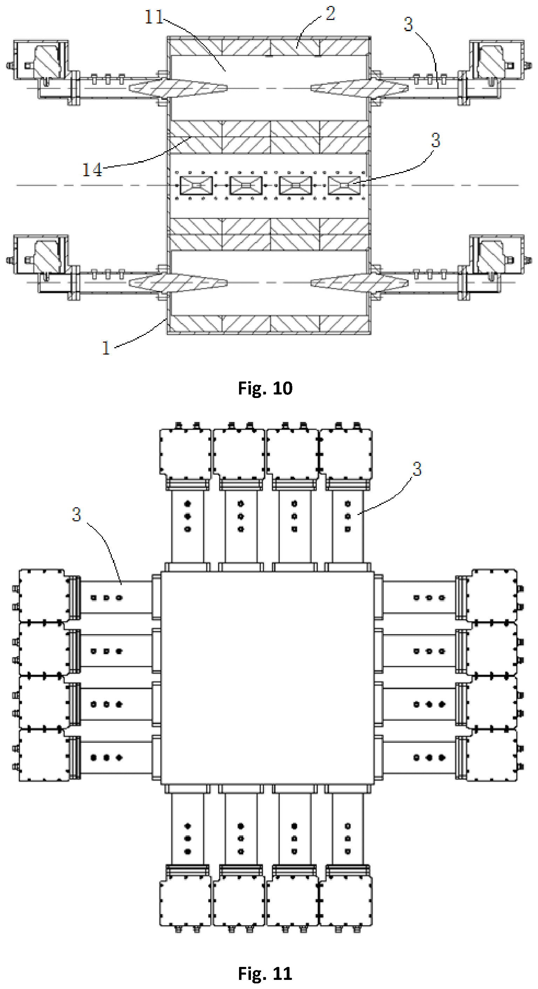

FIG. 10 is a cross-sectional view illustrating an arrangement scheme of multiple microwave heating devices in the microwave heating system of FIG. 9; FIG. 11 is a top view illustrating an arrangement scheme of multiple microwave heating devices in the microwave heating system of FIG. 9.

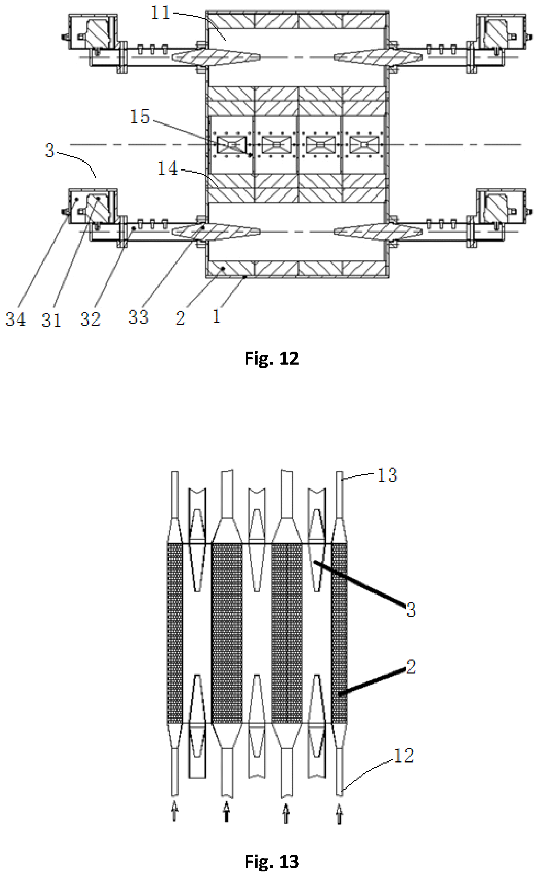

Reference is next made to FIG. 12, which illustrates a microwave heating system according to another preferred embodiment, further improved based on the microwave heating systems of FIGS. 6-8 or FIGS. 9-11. In this embodiment, to further improve heating uniformity of the heat-receiving carriers, in addition to the first microwave shielding elements 14 disposed between heating chambers 11, at least some heating chambers 11 are internally provided with second microwave shielding elements 15. The second microwave shielding elements 15 extend along the entire length of the heating chambers to separate multiple pairs of oppositely disposed microwave heating devices 3 or their dielectric radiators, correspondingly dividing the heating chamber 11 into multiple parallel sub-heating chambers. Each sub-heating chamber is provided with one or more pairs of oppositely disposed microwave heating devices 3 or their dielectric radiators at both ends on the side walls (see FIG. 12). In specific embodiments, the first microwave shielding elements 14 and second microwave shielding elements 15 are made of metal. The first microwave shielding elements 14 may be perforated steel plates or steel meshes, while the second microwave shielding elements 15 may be steel plates. Division by the second microwave shielding elements 15 further homogenizes heating of heat-receiving carriers within a single heating chamber 11 and prevents mutual superposition of microwaves emitted by adjacent microwave heating devices 3, avoiding electric field intensity exceeding the air breakdown strength.

Reference is made to FIG. 13, which illustrates another embodiment of the microwave heating system of the present disclosure. Instead of vertical stacking of multiple heating chambers 11 as shown in FIGS. 6-12, in FIG. 13, the multiple heating chambers are arranged side by side in the vessel body in the left-right direction. Correspondingly, the heat-receiving carriers in the heating chambers are laid in the vertical direction, and the formed heat-receiving carrier layers are located on the left and right sides of the heating chambers. Multiple microwave heating devices 3 corresponding to the heating chambers 11 are mounted on upper and lower side walls of the vessel body 1, with dielectric radiators 33 of the microwave heating devices 3 extending vertically into the heating chambers 11. As shown in the drawing, no first microwave shielding elements 14 are disposed between adjacent left and right heating chambers 11, and heat-receiving carrier layers of two adjacent heating chambers are combined into an integral unit. A reactant inlet 12 and a product outlet 13 are disposed on the vessel body 1 at positions corresponding to the integrated heat-receiving carrier layers, allowing fluid reactants fed through the reactant inlet 12 to flow vertically through the heat-receiving carrier layers 2 and be discharged through the product outlet 13.

The present disclosure is further described below via Examples.

### Comparative Example 1

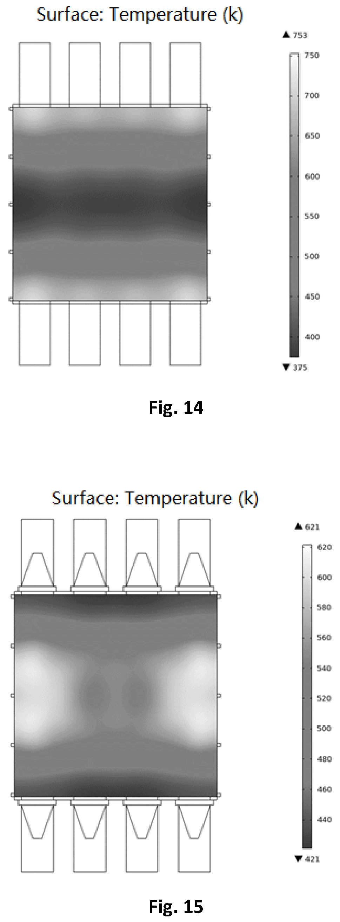

As shown in FIG. 14, in the absence of a dielectric radiator, heating was performed only through an 8-port waveguide (each rectangular block at the upper and lower ends in the figure represents a port). The microwave incidence radiation efficiency was 94.94%, and the maximum temperature difference of the catalyst bed was 350° C., which is a large temperature difference. Moreover, the temperature was mainly concentrated at the microwave radiation feed opening, making it difficult to achieve uniform heating radiation away from the microwave feed.

### Example 1

As shown in FIG. 15, using the technical solution shown in FIG. 2, with the dielectric radiator, it can be seen that the uniformity of the catalyst bed was significantly improved. The catalyst bed away from the microwave feed opening was heated with better effect, the microwave incidence efficiency was increased to 96.11%, and the maximum temperature difference was reduced to 180° C. However, in the middle range away from the microwave feed opening, the temperatures on both sides were high, and the temperature in the middle was slightly lower.

### Example 2

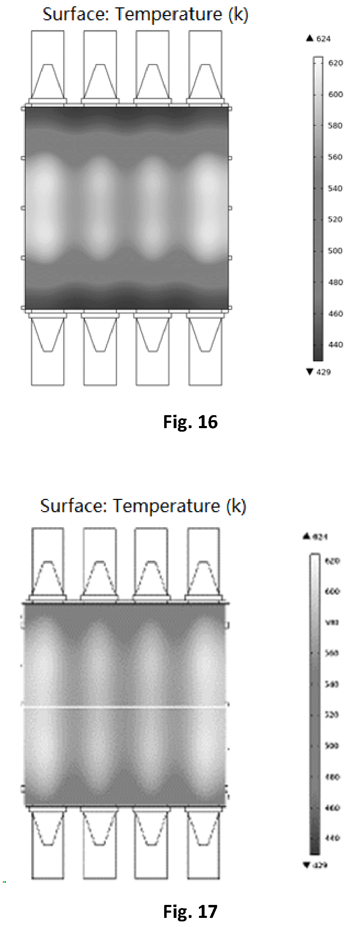

As shown in FIG. 16, with the dielectric radiator and the presence of the first microwave shielding element, the uniformity of the catalyst bed layer was further significantly improved, and the maximum temperature difference was reduced to 180° C. The incidence efficiency was increased to 99.11%. Although the maximum temperature difference was not significantly reduced, the temperature uniformity of most of the catalyst bed away from the microwave feed opening was significantly improved.

### Example 3

As shown in FIG. 17, with the dielectric radiator and the presence of both the first microwave shielding element and the second microwave shielding element, the uniformity of the catalyst bed was further significantly improved, and the maximum temperature difference was reduced to 30° C. The first shielding element is preferably a steel mesh for shielding microwaves but allowing gas to pass through. The second microwave shielding element is a steel plate for shielding microwaves and blocking air. However, those skilled in the art will appreciate that the material of the first shielding element is not limited to steel mesh; any material that can shield microwaves and allow gas to pass through is suitable. Likewise, the second microwave shielding element is not limited to a steel plate, as long as it can shield microwaves and block gas.

### Example 4

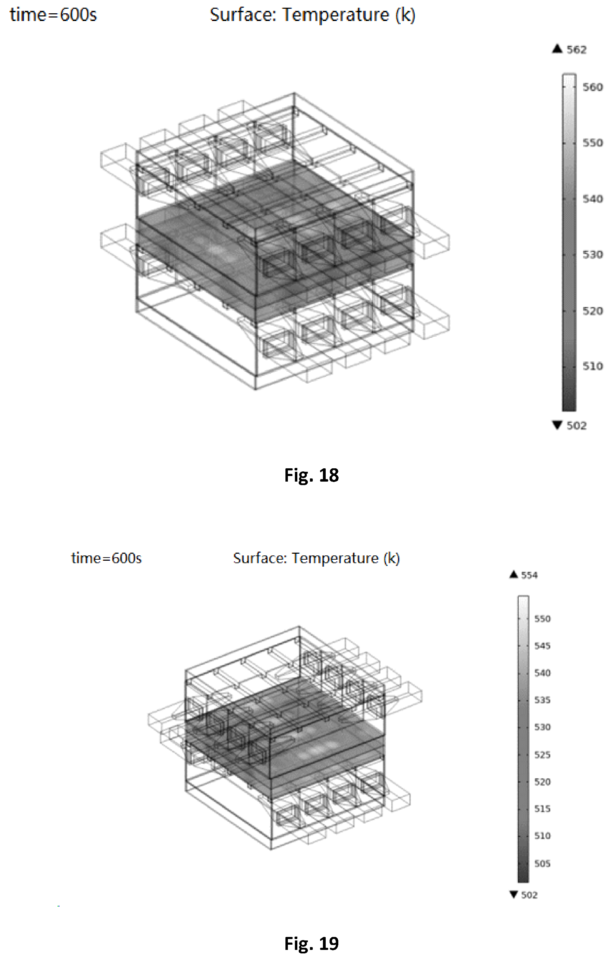

As shown in FIG. 18, dielectric radiators at different levels adopt a co-directional radiation scheme. The maximum temperature difference of the intermediate catalyst bed was 60° C.

### Example 5

As shown in FIG. 18, dielectric radiators at different levels adopt a radiation scheme intersecting at 90° (perpendicular to each other). The maximum temperature difference of the intermediate catalyst bed was 52° C.

It can be seen that in the microwave heating reaction system, both the heating method using multiple radiators arranged in multiple parallel levels and the heating method using multiple radiators arranged in multiple mutually staggered layers can achieve good uniform heating effects; moreover, by providing metal partition plates between multiple groups of radiators, the radiation efficiency and heating uniformity can be further improved.

### Examples 6-9

Define el1 = coupling segment length, el2 = radiating segment length, el3 = transmission segment length. Under simultaneous irradiation by eight 1 kW microwave magnetrons, with a single catalyst bed layer sized 700 mm × 700 mm and a separate radiation cavity of 175 mm for two opposing dielectric radiators, electric field intensity and incident efficiency corresponding to different el1/el2/el3 values are listed in Table 1 below.

**Table 1**

| | Example 6 | Example 7 | Example 8 | Example 9 |
|---|---|---|---|---|
| Length Parameters | el1=60 mm | el1=90 mm | el1=115 mm | el1=115 mm |
| | el2=80 mm | el2=90 mm | el2=160 mm | el2=140 mm |
| | el3=17 mm | el3=17 mm | el3=17 mm | el3=17 mm |
| Electric Field Intensity | 2.35~3.87×10³ V/m | 9~3.23×10³ V/m | 3.2~3.46×10³ V/m | 11.7~3.09×10³ V/m |
| Incident Efficiency | 81.26% | 86.45% | 99.31% | 91.69% |

In Examples 6-9, the maximum electric field intensity inside the vessel body does not exceed 3.87×10³ V/m, all far lower than the electric field breakdown strength under humid air conditions.

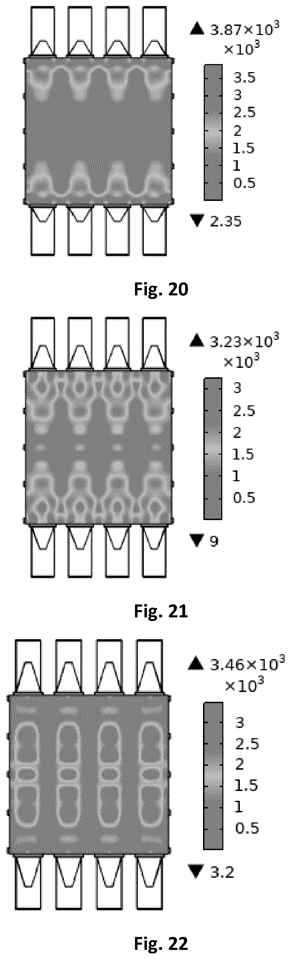

Electric field distribution contour plots of Examples 6-9 are shown in FIGS. 20-23 respectively; uniform electric field intensity in each figure corresponds to uniform heating temperature of the catalyst bed layer. It can be observed that electric field intensity concentrates near vessel body wall surfaces in Examples 6 and 7, indicating uneven electric field distribution, uneven catalyst bed temperature distribution, and low microwave energy utilization efficiency. Examples 8 and 9 exhibit relatively uniform electric fields, corresponding to more homogeneous catalyst bed heating and higher incident efficiency. Within a certain range, the radiator lengths adopted in Examples 8 and 9 facilitate uniform and efficient heating performance.

### Examples 10-13

Except for adjusted coupling segment, radiating segment, and transmission segment lengths, all other conditions remain identical to Examples 6-9. Electric field intensity and incident efficiency corresponding to different el1/el2/el3 values are listed in Table 2 below.

**Table 2**

| | Example 10 | Example 11 | Example 12 | Example 13 |
|---|---|---|---|---|
| Length Parameters | el1=115 mm | el1=115 mm | el1=115 mm | el1=120 mm |
| | el2=110 mm | el2=80 mm | el2=150 mm | el2=160 mm |
| | el3=15 mm | el3=15 mm | el3=17 mm | el3=17 mm |
| Electric Field Intensity | 29.1~2.85×10³ V/m | 17.7~3.12×10³ V/m | 11.1~3.09×10³ V/m | 8.84~3.44×10³ V/m |
| Incident Efficiency | 96.31% | 99.06% | 97.78% | 99.39% |

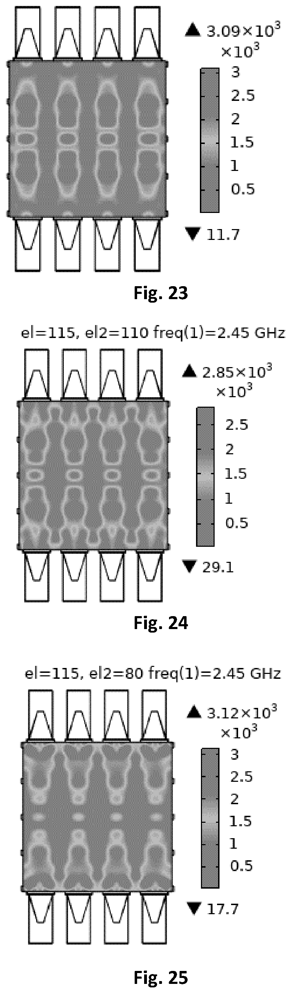

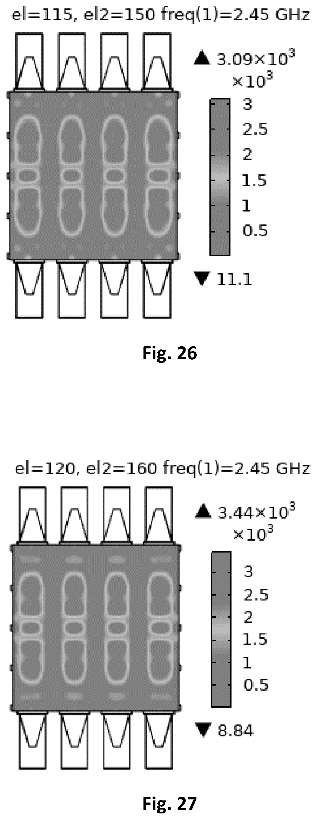

Electric field distribution contour plots of Examples 10-13 are shown in FIGS. 24-27 respectively. It can be seen that when coupling segment lengths are identical or similar and fall within reasonable ranges, utilization efficiency of dielectric radiators exceeds 95%. Shorter radiating segments (e.g., Examples 10 and 11) lead to uneven microwave distribution inside the vessel body. When radiating segments are sized within reasonable ranges, superior microwave electric field distribution and radiation efficiency are achieved.

It can be concluded from Examples 6-13 that adjusting the lengths of the coupling segment, transmission segment, and radiating segment further modulates electric field distribution, thereby tuning bed layer heating uniformity and radiation efficiency.

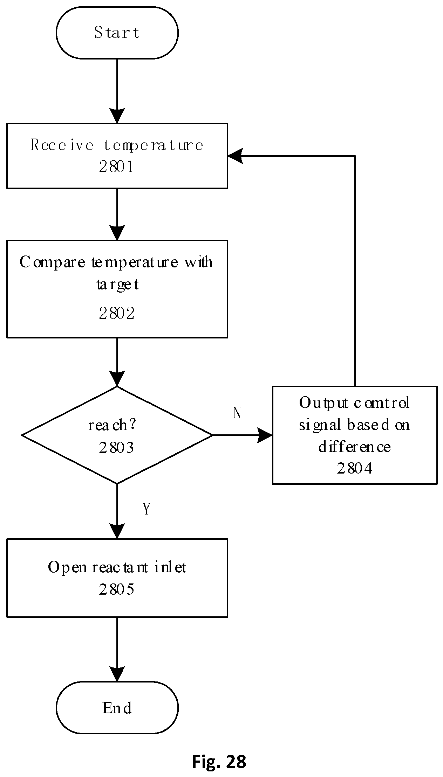

Reference is next made to FIG. 28, which discloses a waste gas (e.g., VOC) treatment method implemented using any microwave heating system described above. As shown in FIG. 28, at Step 2801, a controller (not shown) receives temperature signals from temperature sensors disposed on the heat-receiving carriers 2 or inside the heating chambers 11. The method proceeds to Step 2802, where the controller compares the received temperature signals with a target temperature. Next, Step 2803 determines whether the temperature signals have reached the target temperature. If the temperature is greater than or equal to the target temperature, the method proceeds to Step 2805. At Step 2805, the reactant inlet is opened to inject waste gas containing volatile organic compounds (VOCs). If Step 2803 determines the temperature signals have not yet reached the target temperature, the controller outputs control signals based on the difference between temperature signals and the target temperature. The control signals regulate the microwave generating unit of the microwave heating device 3 to continue generating microwaves for sustained heating of the heat-receiving carriers 2 inside the heating chambers 11. In addition, the controller may regulate inlet gas flow based on product composition at the outlet of the vessel body 1. Where multiple heating chambers are provided, the controller may independently regulate the temperature of each heating chamber.

Those skilled in the art will recognize that the sequence of steps in the method of FIG. 28 is not limited to the order illustrated in the drawings; certain steps may be performed simultaneously or omitted without conflicting with the technical objectives of the present disclosure.

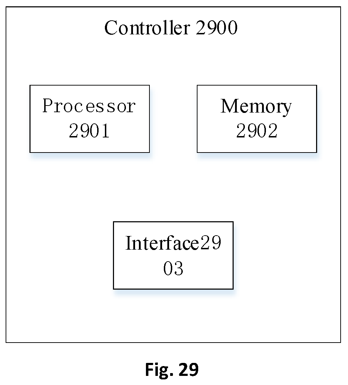

Reference is now made to FIG. 29, which illustrates a controller 2900 according to an embodiment of the present disclosure, corresponding to the controller referenced in the foregoing embodiments. The controller includes a processor 2901, a memory 2902, and an interface 2903. The processor 2901 executes computer-executable instructions defining the method illustrated in FIG. 28 to implement waste gas treatment operations. A computer program product including computer-executable instructions may be stored in the memory 2902. The method described in FIG. 28 may be defined by computer-executable instructions contained in a computer program product stored in the memory 2902 and controlled by the processor 2901 executing such computer-executable instructions. The interface 2903 may include a network interface for communicating with other devices via a network, and may also include other input/output devices enabling user interaction with the controller 2900 (e.g., display, keyboard, mouse, speaker, buttons, touchpad, touchscreen, etc.). Those skilled in the relevant art will recognize that practical control system implementations may contain additional components, and FIG. 29 provides a high-level schematic illustrating certain components of such control systems for explanatory purposes only.

The memory 2902 includes tangible non-transitory machine-readable storage media, and may further include high-speed random-access memory such as dynamic random-access memory (DRAM), static random-access memory (SRAM), double data rate synchronous dynamic random-access memory (DDR RAM), or other random-access solid-state memory devices. It may also include non-volatile memory such as one or more magnetic disk storage devices (e.g., internal hard drives and removable magnetic disks), magneto-optical storage devices, optical disk storage devices, flash memory devices, semiconductor memory devices (e.g., erasable programmable read-only memory (EPROM), electrically erasable programmable read-only memory (EEPROM)), compact disc read-only memory (CD-ROM), digital versatile disc read-only memory (DVD-ROM), or other non-volatile solid-state storage devices.

The embodiments of the present disclosure are described in detail above. It shall be recognized that certain features of the present disclosure described in the context of separate embodiments for clarity may also be provided in combination within a single embodiment. Conversely, various features of the present disclosure described in the context of a single embodiment for simplicity may also be provided separately or in any suitable subcombination or in any other described embodiment of the present disclosure. Features described in the context of various embodiments shall not be deemed essential features of those embodiments unless the embodiment would be inoperative without such elements.

Although the present disclosure has been described in conjunction with specific embodiments thereof, it is evident that numerous alternatives, modifications, and variations will be apparent to those skilled in the art. Accordingly, the present disclosure is intended to cover all such alternatives, modifications, and variations falling within the spirit and broad scope of the appended claims.

All publications, patents, and patent applications referenced herein are incorporated by reference in their entirety to the same extent as if each individual publication, patent, or patent application were specifically and individually indicated to be incorporated by reference. In addition, any citation or identification of a reference in the present disclosure shall not be construed as an admission that such reference constitutes prior art available against the present disclosure. Section headings, where used, shall not be construed as limiting.

## Claims

1. A microwave heating system, comprising a vessel body (1), wherein the vessel body (1) includes at least one heating chamber (11);
wherein a microwave shielding element (15) is disposed inside the heating chamber (11) and divides the heating chamber (11) into a plurality of sub-heating chambers, each sub-heating chamber being provided with a microwave heating device (3) and a heat-receiving carrier (2) capable of generating heat upon absorbing microwaves, wherein the microwave heating device (3) is mounted on a side wall of the sub-heating chamber, the microwave heating device (3) comprising a dielectric radiator (33) made of dielectric material, the dielectric radiator (33) being provided with a radiating segment (331) disposed inside the sub-heating chamber and being configured to radiate microwaves into the sub-heating chamber to heat the heat-receiving carrier (2).

2. The microwave heating system according to claim 1, wherein the microwave shielding element (15) extends along the entire length of the heating chamber (11) to arrange each sub-heating chamber in parallel, and dielectric radiators (33) are oppositely mounted on side walls at both ends of each sub-heating chamber.

3. The microwave heating system according to claim 2, wherein each sub-heating chamber is equipped with an even number of dielectric radiators (33), the even number of dielectric radiators (33) being divided into two groups symmetrically mounted on side walls at both ends of the sub-heating chamber.

4. The microwave heating system according to any one of claims 1 to 3, wherein the vessel body (1) comprises a plurality of vertically stacked heating chambers (11), the heat-receiving carriers (2) being arranged as heat-receiving carrier layers at upper and/or lower portions of each sub-heating chamber, and the temperatures of the stacked heating chambers (11) being independently controllable or forming a temperature gradient from top to bottom.

5. The microwave heating system according to claim 4, wherein the microwave shielding element (15) is a second microwave shielding element (15), and a first microwave shielding element (14) is arranged between every two vertically adjacent heating chambers (11).

6. The microwave heating system according to claim 5, wherein the second microwave shielding element (15) is a steel plate for microwave shielding and gas isolation, and the first microwave shielding element (14) is a steel mesh for microwave shielding while permitting gas passage.

7. The microwave heating system according to any one of claims 1 to 6, wherein the radiating segment (331) has a multi-faceted structure comprising radiating surfaces (331a) facing the heat-receiving carrier (2) to emit microwaves toward the heat-receiving carrier (2).

8. The microwave heating system according to claim 7, wherein the radiating segment (331) has a tapered multi-faceted structure, and the radiating surfaces are tapered.

9. The microwave heating system according to claim 8, wherein the tapered multi-faceted structure of the radiating segment (331) is a frusto-pyramidal structure, the radiating surfaces (331a) consist of two opposite surfaces of the frusto-pyramidal structure, the radiating segment (331) further includes two side surfaces (331b) adjacent to the two radiating surfaces (331a) respectively, and the area of each radiating surface (331a) is larger than that of each side surface (331b).

10. The microwave heating system according to claim 9, wherein the frusto-pyramidal structure is a quadrangular frusto-pyramidal structure, with two radiating surfaces (331a) and two side surfaces (331b).

11. The microwave heating system according to any one of claims 1 to 10, wherein the heating chamber (11) has a rectangular cross-section, the dielectric radiators (33) of two vertically adjacent heating chambers (11) are mounted on adjacent side walls or non-adjacent side walls, and where the dielectric radiators are mounted on non-adjacent side walls, the extension directions of the upper and lower dielectric radiators are perpendicular to each other.

12. The microwave heating system according to any one of claims 1 to 10, wherein the heat-receiving carrier (2) contains catalysts, and the vessel body (1) is provided with a reactant inlet (12) and a product outlet (13), allowing fluid reactants fed through the reactant inlet (12) to flow through the heat-receiving carrier (2) and undergo chemical reactions under catalysis of the catalysts.

13. The microwave heating system according to any one of claims 1 to 10, wherein the length of the heating chamber (11) along the extension direction of the dielectric radiator is 2 to 4 times the length by which the radiating segment (331) extends into the heating chamber (11).

14. The microwave heating system according to any one of claims 1 to 10, wherein the microwave heating device (3) comprises a microwave generating unit (31), the dielectric radiator (33) penetrating through a side wall of the vessel body (1) to extend into the sub-heating chamber, and a waveguide (32) configured to guide microwaves generated by the microwave generating unit (31) to the dielectric radiator (33).

15. The microwave heating system according to claim 14, wherein the dielectric radiator (33) further includes a coupling segment (333) extending inside the waveguide (32) and a transmission segment (332) extending between the coupling segment (333) and the radiating segment (331), the coupling segment having a tapered multi-faceted tip structure.

16. The microwave heating system according to claim 15, wherein the length of the coupling segment (333) is 0.75 to 1 times the microwave wavelength; the length of the radiating segment (331) is at least 0.8 times the microwave wavelength.

17. The microwave heating system according to any one of claims 1 to 10, wherein the material of the dielectric radiator (33) has a dielectric constant greater than 9 and a dielectric loss less than 0.02.

18. A microwave heating device for use in the microwave heating system according to any one of claims 1 to 17, the microwave heating device comprising a microwave generating unit (31), a dielectric radiator (33) configured to radiate microwaves generated by the microwave generating unit (31) toward a heat-receiving carrier, and a waveguide (32) configured to guide microwaves generated by the microwave generating unit (31) to the dielectric radiator (33), wherein the dielectric radiator (33) comprises a radiating segment (331) disposed inside the heating chamber (11), the radiating segment (331) having a tapered multi-faceted structure including radiating surfaces (331a) facing the heat-receiving carrier (2) to emit microwaves toward the heat-receiving carrier (2).

19. A waste gas treatment method implemented on the microwave heating system according to any one of claims 1 to 17, wherein the microwave heating system includes a controller and temperature sensors disposed on heat-receiving carriers or inside heating chambers to monitor temperatures of the heat-receiving carriers in real time, the method comprising:
receiving measured temperatures from the temperature sensors;
comparing the measured temperatures with a target temperature;
outputting control signals to a microwave generating unit of a microwave heating device based on a difference between the measured temperatures and the target temperature, so as to control the microwave generating unit to generate microwaves for heating heat-receiving carriers inside the heating chambers; and
opening a reactant inlet to inject waste gas containing volatile organic compounds in response to the measured temperatures being greater than or equal to the target temperature.

20. A controller, comprising:
a processor; and
a computer-readable storage medium storing a computer program including executable instructions, wherein the executable instructions, when executed by the processor, implement the method according to claim 19.

21. A computer-readable storage medium storing a computer program including executable instructions, wherein the executable instructions, when executed by a processor, implement the method according to claim 19.

22. A computer program product comprising executable instructions, wherein the executable instructions, when executed by a processor, implement the method according to claim 19.
